(19) Europäisches Patentamt
European Patent Office
Office européen des brevets

(11) **EP 1 818 207 A2**

(12) **EUROPEAN PATENT APPLICATION**

(43) Date of publication:
**15.08.2007 Bulletin 2007/33**

(51) Int Cl.:
***B60L 7/08*** (2006.01)

(21) Application number: **07002719.8**

(22) Date of filing: **08.02.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **10.02.2006 JP 2006033627**

(71) Applicant: **KABUSHIKI KAISHA TOSHIBA
Tokyo 105-8001 (JP)**

(72) Inventors:
• **Miyazaki, Akira
1-chome, Minato-ku
Tokyo 105-8001 (JP)**
• **Lin, Min
1-chome, Minato-ku
Tokyo 105-8001 (JP)**

(74) Representative: **HOFFMANN EITLE
Patent- und Rechtsanwälte
Arabellastrasse 4
81925 München (DE)**

(54) **Electric rolling stock control apparatus**

(57)     An electric rolling stock control apparatus includes, an alternating-current motor (15) for making an electric rolling stock run, and for carrying out brake control of the electric rolling stock, a dynamic braking resistor (17) for consuming electric power generated by the brake control, electric current detector (18) for detecting a value of current flowing in the dynamic braking resistor (17), voltage detector (20) for detecting a value of voltage between both terminals of the dynamic braking resistor (17), dynamic braking resistance calculating unit (19) for calculating a value of resistance of the dynamic braking resistor (17) on the basis of the value of current and the value of voltage, and a dynamic braking resistance partial ground fault detector (21) for detecting a partial ground fault in the dynamic braking resistor (17) when the value of resistance is less than a predetermined value.

FIG.1

EP 1 818 207 A2

**Description**

The present invention relates to an electric rolling stock control apparatus having a mechanism of carrying out brake control of an electric rolling stock by making an alternating-current motor carry out generation control.

Generally, an electric rolling stock control apparatus carries out brake control of an electric rolling stock by carrying out generation control of an alternating-current motor. Concretely, the alternating-current motor onto which generation control has been carried out converts rotational energy into alternating-current power. An inverter converts the alternating-current power converted by the alternating-current motor into direct-current power. The direct-current power converted by the inverter is consumed as Joule heat by a dynamic braking resistor.

In such an electric rolling stock control apparatus, when Joule heat consumed in a dynamic braking resistor is made to be excessive, the dynamic braking resistor reaches a high temperature. In accordance therewith, there are cases in which the dynamic braking resistor is burned out or emits smoke.

Then, there is disclosed an electric rolling stock control apparatus which detects an excess temperature of a dynamic braking resistor, and in which it is possible to detect an excess temperature of the dynamic braking resistor without providing a temperature detector (for example, refer to Jpn. Pat. Appln. KOKAI Publication No. 2005-27454). Namely, the electric rolling stock control apparatus calculates a value of resistance of the dynamic braking resistor on the basis of a value of current flowing in the dynamic braking resistor, and values of voltages at the both ends of the dynamic braking resistor. The electric rolling stock control apparatus compares the calculated value of resistance with a value of resistance at an allowable temperature of the dynamic braking resistor computed in advance. The electric rolling stock control apparatus detects that the dynamic braking resistor is at an excess temperature when the value of resistance is greater as a result of the comparison.

However, when a partial short-circuit is brought about in the dynamic braking resistor, consumption of the same electric power as that in a normal operation by the dynamic braking resistor makes the current-carrying part overloaded. In this case burnout and the like may be brought about in the dynamic braking resistor. In an electric rolling stock control apparatus as described above, it is impossible to detect a partial ground fault in the dynamic braking resistor.

An object of the invention is to provide an electric rolling stock control apparatus capable of detecting a partial ground fault in a dynamic braking resistor for consuming electric power generated by brake control of an electric rolling stock.

In accordance with one embodiment of the present invention, an electric rolling stock control apparatus includes, an inverter for converting converts direct-current power from a direct-current power supply into three-phase alternating-current power; an alternating-current motor for making an electric rolling stock run when driven by the three-phase alternating-current power converted by the inverter, and for carrying out brake control of the electric rolling stock when controlled as a generator; a dynamic braking resistor for consuming electric power generated by the alternating-current motor by the brake control of the electric rolling stock; electric current detecting means for detecting a value of current flowing in the dynamic braking resistor; voltage detecting means for detecting a value of voltage between both terminals of the dynamic braking resistor; dynamic braking resistance calculating means for calculating a value of resistance of the dynamic braking resistor on the basis of the value of current detected by the electric current detecting means and the value of voltage detected by the voltage detecting means; and a dynamic braking resistance partial ground fault detector for detecting a partial ground fault in the dynamic braking resistor when the value of resistance calculated by the dynamic braking resistance calculating means is less than a predetermined value.

The invention can be more fully understood from the following detailed description when taken in conjunction with the accompanying drawings, in which:

FIG. 1 is a block diagram of an electric rolling stock control apparatus according to a first embodiment of the present invention;
FIG. 2 is a block diagram of an electric rolling stock control apparatus according to a second embodiment of the present invention;
FIG. 3 is a block diagram of an electric rolling stock control apparatus according to a third embodiment of the present invention;
FIG. 4 is a block diagram of an electric rolling stock control apparatus according to a fourth embodiment of the present invention;
FIG. 5 is a block diagram of an electric rolling stock control apparatus according to a fifth embodiment of the present invention; and
FIG. 6 is a block diagram of an electric rolling stock control apparatus according to a sixth embodiment of the present invention.

Hereinafter, embodiments of the present invention will be described with reference to the drawings.

(First Embodiment)

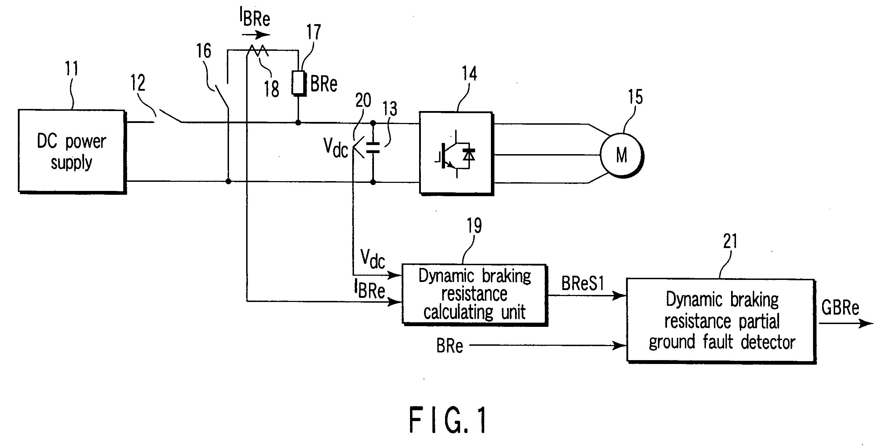

FIG. 1 is a block diagram of an electric rolling stock control apparatus according to a first embodiment of the present invention. Note that portions which are the same as those in the first embodiment are denoted by the same reference numerals, detailed descriptions thereof will be omitted, and different portions will be mainly described. In the following embodiments as well, overlapping descriptions will be omitted in the same way.

A direct-current power supply 11 rectifies electric power generated from a direct-current overhead line (catenary) or an engine generator on a rolling stock by a rectifier, and outputs direct-current power. The direct-current power supply 11 is connected to a direct-current terminal of an inverter 14 via a first switch 12. A filter capacitor 13 is connected between the direct-current terminals of the inverter 14 at a side closer to the inverter 14 than the first switch 12. An alternating-current motor 15 serving as a load is connected to the output side of the inverter 14. Usually, an induction motor is used as the alternating-current motor 15. Further, operation control at variable voltages/variable frequencies (VVVF) is carried out onto the inverter 14.

Further, a dynamic braking resistor 17 is connected to the direct-current terminal of the inverter 4 via a second switch 16. At the time of carrying out a brake operation of the electric rolling stock, the electric rolling stock control apparatus controls the alternating-current motor 15 as a generator by opening the first switch 12 and closing the second switch 16. The generated power is consumed by the dynamic braking resistor 17.

An electric current detector 18 detects a value of current IBRe flowing in the dynamic braking resistor 17. The value of current IBRe detected by the electric current detector 18 is inputted to a dynamic braking resistance calculating unit 19. A voltage detector 20 detects a voltage Vdc of the filter capacitor 13 (voltage between the direct-current terminals of the inverter 14, or voltage between the both terminals of the dynamic braking resistor 17). The value of voltage Vdc detected by the voltage detector 20 is inputted to the dynamic braking resistance calculating unit 19. The dynamic braking resistance calculating unit 19 calculates a value of resistance BReS1 on the basis of the value of current IBRe and the value of voltage Vdc as in formula (1).

$$BReS1 = Vdc/IBRe \ \dots \ (1)$$

A dynamic braking resistance partial ground fault detector 21 determines whether or not the dynamic braking resistor 17 is in a sound state or in a partial ground fault state on the basis of the value of resistance BReS1 which is an output from the dynamic braking resistance calculating unit 19 and a rated value (predetermined value) BRe of the dynamic braking resistor 17.

For example, the dynamic braking resistance partial ground fault detector 21 outputs a dynamic braking resistance partial ground fault detection signal GBRe (GBRe = 1) when the value of resistance BReS1 is less than the rated value (predetermined value) BRe of the dynamic braking resistor 17 (in the case of BReS1 < BRe). The dynamic braking resistance partial ground fault detector 21 outputs a dynamic braking resistance partial ground fault detection signal GBRe (GBRe = 0) when the value of resistance BReS1 is greater than or equal to the rated value (predetermined value) BRe of the dynamic braking resistor 17 (in the case of BReS1 ≥ BRe). Here, the dynamic braking resistance partial ground fault detection signal GBRe = 1 shows a partial ground fault state. The dynamic braking resistance partial ground fault detection signal GBRe = 0 shows a sound state.

The dynamic braking resistance partial ground fault detector 21 stops the brake operation or displays the defect when the value of resistance BReS1 calculated by the dynamic braking resistance calculating unit 19 is less than the predetermined value BRe, i.e., when the dynamic braking resistance partial ground fault detection signal GBRe is 1.

In accordance with the first embodiment, the dynamic braking resistance calculating unit 19 calculates a value of resistance BReS1 of the dynamic braking resistor 17 on the basis of a value of current IBRe detected by the electric current detector 18 and a value of voltage Vdc detected by the voltage detector 20. The dynamic braking resistance partial ground fault detector 21 stops the brake operation or displays the defect when the value of resistance BReS1 calculated by the dynamic braking resistance calculating unit 19 is less than the predetermined value BRe. In accordance therewith, it is possible to prevent the dynamic braking resistor from being burned out or the like even in a state in which a defect such as a short circuit or the like is brought about in the dynamic braking resistor 17. Further, the electric rolling stock control apparatus can continue to drive the electric rolling stock. Accordingly, it is possible to improve the reliability of the system.

(Second Embodiment)

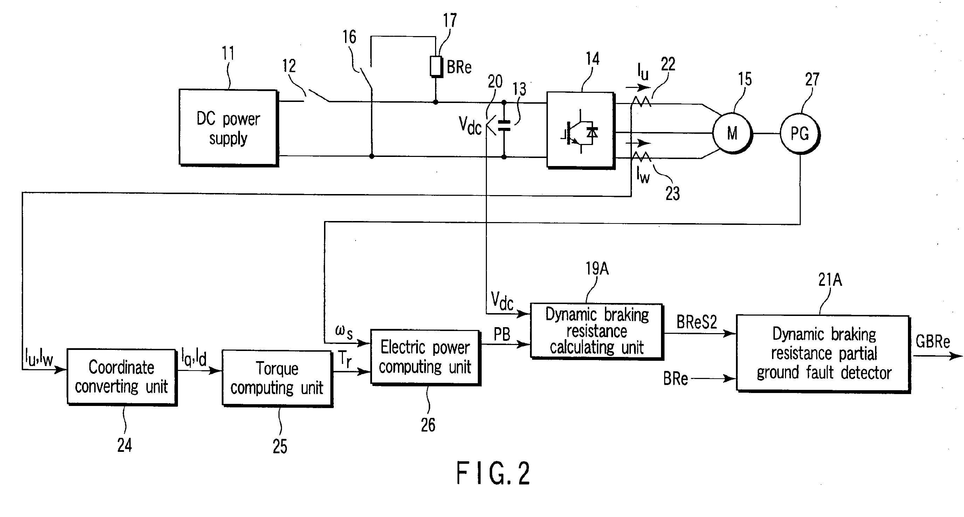

FIG. 2 is a block diagram showing an electric rolling stock control apparatus according to a second embodiment of the present invention. In the second embodiment, in place of the dynamic braking resistance calculating unit 19 and the dynamic braking resistance partial ground fault detector 21 in the first embodiment shown in FIG. 1, a dynamic braking resistance calculating unit 19A, a dynamic braking resistance partial ground fault detector 21A, a coordinate converting unit 24, a torque computing unit 25, and an electric power computing unit 26 are provided. Further, in place of the electric current detector 18, an electric current detector 22, an electric current detector 23, and a velocity sensor 27 are provided.

The dynamic braking resistance calculating unit 19A calculates a value of resistance BReS2 of the dynamic braking resistor 17 on the basis of braking electric power PB and a value of voltage Vdc of the dynamic braking resistor 17.

The electric current detector 22 detects a value of u-phase current Iu of the alternating-current motor 15. The electric current detector 23 detects a value of w-phase current Iw of the alternating-current motor 15. The value of u-phase current Iu detected by the electric current detector 22 and the value of w-phase current Iw detected by the electric current detector 23 are inputted to the coordinate converting unit 24. The coordinate converting unit 24 calculates a value of torque current Iq and a value of exciting current Id by dq axis transformation computing on the basis of the value of u-phase current Iu and the value of w-phase current Iw, and outputs those to the torque computing unit 25. The dq axis coordinates are a coordinate system divided in accordance with a component acting on torque and a component which does not act on torque.

The torque computing unit 25 computes torque Tr by formula (2) using a value of torque current Iq and a value of exciting current Id which are outputs from the coordinate converting unit 24 being inputted.

$$Tr = K1 \cdot Id \cdot Iq \quad \dots (2)$$

However, K1 is a coefficient which is substantially the same as mutual inductance.

The torque Tr of the alternating-current motor 15 computed by the torque computing unit 25 is inputted to the electric power computing unit 26. The velocity sensor 27 detects a motor velocity $\omega$s which is a rotational velocity of the alternating-current motor 15. The motor velocity $\omega$s detected by the velocity sensor is inputted to the electric power computing unit 26. The electric power computing unit 26 computes braking electric power PB by formula (3) on the basis of the torque Tr and the motor velocity $\omega$s.

$$PB = Tr \cdot \omega s \quad \dots (3)$$

The braking electric power PB computed by the electric power computing unit 26 is inputted to the dynamic braking resistance calculating unit 19A. The value of voltage Vdc of the filter capacitor 13 detected by the voltage detector 20 is inputted to the dynamic braking resistance calculating unit 19A. The dynamic braking resistance calculating unit 19A calculates a value of resistance BReS2 by formula (4) on the basis of the braking electric power PB and the value of voltage Vdc.

$$BReS2 = Vdc2/PB \quad \dots (4)$$

The dynamic braking resistance partial ground fault detector 21A determines whether the dynamic braking resistor 17 is in a sound state or in a partial ground fault state on the basis of the value of resistance BReS2 which is an output from the dynamic braking resistance calculating unit 19A and the rated value BRe of the dynamic braking resistor 17.

For example, the dynamic braking resistance partial ground fault detector 21A outputs a dynamic braking resistance partial ground fault detection signal GBRe (GBRe = 1) when the value of resistance BReS2 is less than the rated value (predetermined value) BRe of the dynamic braking resistor 17 (in the case of BReS2 < BRe). The dynamic braking resistance partial ground fault detector 21A outputs a dynamic braking resistance partial ground fault detection signal GBRe (GBRe = 0) when the value of resistance BReS2 is greater than or equal to the rated value (predetermined value) BRe of the dynamic braking resistor 17 (in the case of BReS2 $\geq$ BRe). Here, the dynamic braking resistance partial ground fault detection signal GBRe = 1 indicates a partial ground fault state. The dynamic braking resistance partial ground fault detection signal GBRe = 0 indicates a sound state.

The dynamic braking resistance partial ground fault detector 21A stops the brake operation or displays the defect when the value of resistance BReS2 calculated by the dynamic braking resistance calculating unit 19A is less than the predetermined value BRe, i.e., when the dynamic braking resistance partial ground fault detection signal GBRe is 1.

In accordance with the second embodiment, the same effects as those in the first embodiment can be obtained by calculating the value of resistance BReS2 of the dynamic braking resistor 17 on the basis of the braking electric power PB and the value of voltage Vdc of the dynamic braking resistor 17.

(Third Embodiment)

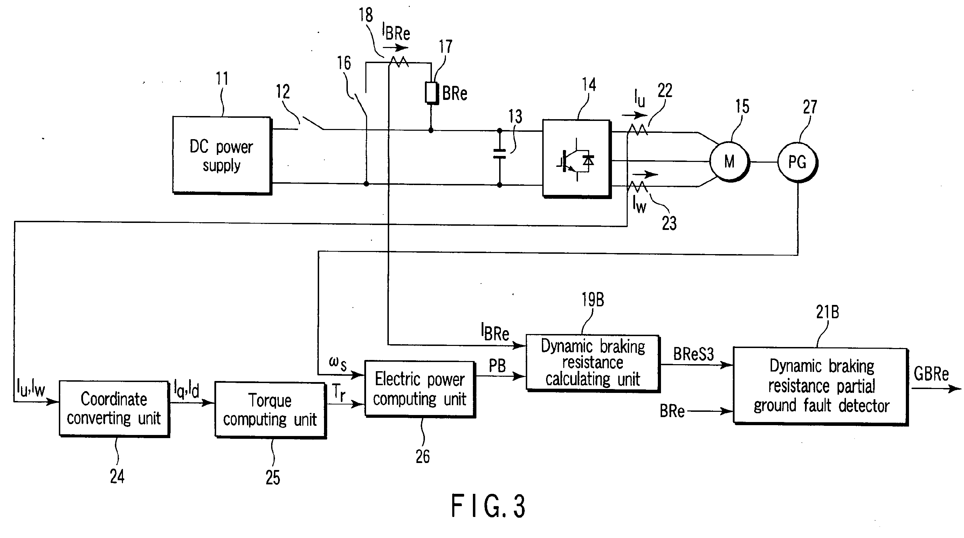

FIG. 3 is a block diagram of an electric rolling stock control apparatus according to a third embodiment of the present invention. In the third embodiment, in place of the dynamic braking resistance calculating unit 19A and the dynamic braking resistance partial ground fault detector 21A in the second embodiment shown in FIG. 2, a dynamic braking resistance calculating unit 19B and a dynamic braking resistance partial ground fault detector 21B are provided. Further, an electric current detector 18 is provided in place of the voltage detector 20.

The dynamic braking resistance calculating unit 19B calculates a value of resistance BReS3 of the dynamic braking resistor 17 on the basis of braking electric power PB and a value of current IBRe.

The value of current IBRe detected by the electric current detector 18 is inputted to the dynamic braking resistance calculating unit 19B. The braking electric power PB computed by an electric power computing unit 26 is inputted to the dynamic braking resistance calculating unit 19B. The dynamic braking resistance calculating unit 19B computes a value of resistance BReS3 by formula (5) using the braking electric power PB and the value of current IBRe being inputted.

$$BReS3 = PB/IBRe2 \dots (5)$$

The dynamic braking resistance partial ground fault detector 21B determines whether the dynamic braking resistor 17 is in a sound state or in a partial ground fault state on the basis of a value of resistance BReS3 which is an output from the dynamic braking resistance calculating unit 19B and a rated value BRe of the dynamic braking resistor 17.

For example, the dynamic braking resistance partial ground fault detector 21B outputs a dynamic braking resistance partial ground fault detection signal GBRe (GBRe = 1) when the value of resistance BReS3 is less than the rated value (predetermined value) BRe of the dynamic braking resistor 17 (in the case of BReS3 < BRe). The dynamic braking resistance partial ground fault detector 21B outputs a dynamic braking resistance partial ground fault detection signal GBRe (GBRe = 0) when the value of resistance BReS3 is greater than or equal to the rated value (predetermined value) BRe of the dynamic braking resistor 17 (in the case of BReS3 $\geq$ BRe). Here, the dynamic braking resistance partial ground fault detection signal GBRe = 1 indicates a partial ground fault state. The dynamic braking resistance partial ground fault detection signal GBRe = 0 indicates a sound state.

The dynamic braking resistance partial ground fault detector 21B stops the brake operation or displays the defect when the value of resistance BReS3 calculated by the dynamic braking resistance calculating unit 19B is less than the predetermined value BRe, i.e., when the dynamic braking resistance partial ground fault detection signal GBRe is 1.

In accordance with the third embodiment, the same effects as those in the second embodiment can be obtained by calculating the value of resistance BReS3 of the dynamic braking resistor 17 on the basis of the braking electric power PB and the value of current IBRe flowing in the dynamic braking resistor 17.

(Fourth Embodiment)

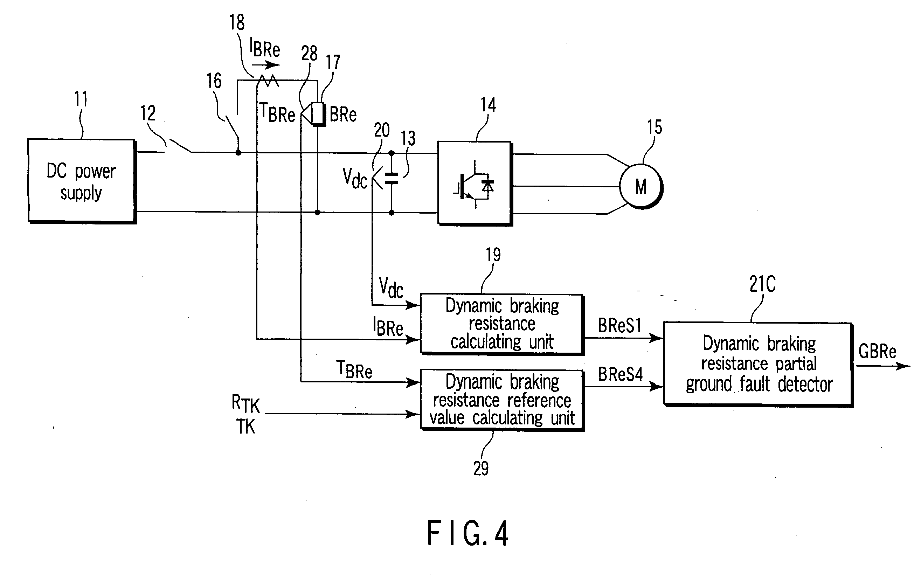

FIG. 4 is a block diagram of an electric rolling stock control apparatus according to a fourth embodiment of the present invention. In the fourth embodiment, in place of the dynamic braking resistance partial ground fault detector 21 in the first embodiment shown in FIG. 1, a dynamic braking resistance partial ground fault detector 21C, a temperature detector 28, and a dynamic braking resistance reference value calculating unit 29 are provided.

The temperature detector 28 detects a temperature TBRe of the dynamic braking resistor 17. The temperature TBRe detected by the temperature detector 28 is inputted to the dynamic braking resistance reference value calculating unit 29. The dynamic braking resistance reference value calculating unit 29 calculates a calculation reference value (predetermined value) BReS4 by formula (6) on the basis of the temperature TBRe.

$$BReS4 = RTK + K2 \ (TBRe - TK) \dots (6)$$

Here, RTK is a value of resistance when a resistive element is at a temperature TK, and K2 is a temperature coefficient.

The dynamic braking resistance partial ground fault detector 21C determines whether the dynamic braking resistor 17 is in a sound state or in a partial ground fault state on the basis of the value of resistance BReS1 which is an output from the dynamic braking resistance calculating unit 19 and the calculation reference value BReS4 which is an output from the dynamic braking resistance reference value calculating unit 29.

For example, the dynamic braking resistance partial ground fault detector 21C outputs a dynamic braking resistance partial ground fault detection signal GBRe (GBRe = 1) when the value of resistance BReS1 is less than the calculation reference value BReS4 (BReS1 < BReS4). The dynamic braking resistance partial ground fault detector 21C outputs a dynamic braking resistance partial ground fault detection signal GBRe (GBRe = 0) when the value of resistance BReS1 is greater than or equal to the calculation reference value BReS4 (BReS1 ≥ BReS4). Here, the dynamic braking resistance partial ground fault detection signal GBRe = 1 indicates a partial ground fault state. The dynamic braking resistance partial ground fault detection signal GBRe = 0 indicates a sound state.

The dynamic braking resistance partial ground fault detector 21C stops the brake operation or displays the defect when the value of resistance BReS1 calculated by the dynamic braking resistance calculating unit 19 is less than the calculation reference value BReS4 calculated by the dynamic braking resistance reference value calculating unit 29, i.e., when the dynamic braking resistance partial ground fault detection signal GBRe is 1.

In accordance with the fourth embodiment, the value of resistance BReS1 calculated by the dynamic braking resistance calculating unit 19 is compared with the calculation reference value BReS4 calculated on the basis of the temperature TBRe of the dynamic braking resistor 17. In accordance therewith, the same effects as those in the first embodiment can be obtained. Moreover, because a reference value of the dynamic braking resistor is adjusted in accordance with a change in temperature, it is possible to further improve a detection accuracy compared with that of the first embodiment. Namely, it is possible to detect an ground fault at a portion closer to a terminal at the grounded side of the dynamic braking resistor 17, which makes it possible to further improve the reliability of the system.

(Fifth Embodiment)

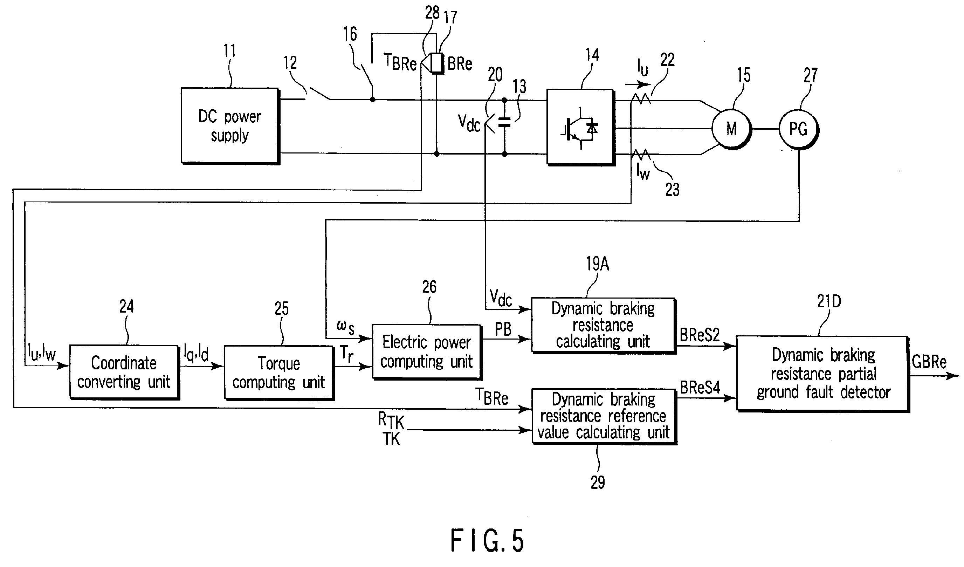

FIG. 5 is a block diagram showing an electric rolling stock control apparatus according to a fifth embodiment of the present invention. In the fifth embodiment, in place of the dynamic braking resistance calculating unit 19 and the dynamic braking resistance partial ground fault detector 21C in the fourth embodiment shown in FIG. 4, a dynamic braking resistance calculating unit 19A, a dynamic braking resistance partial ground fault detector 21D, a coordinate converting unit 24, a torque computing unit 25, and an electric power computing unit 26 are provided. Further, in place of the electric current detector 18, an electric current detector 22, an electric current detector 23, and an velocity sensor 27 are provided. Note that a method for calculating a value of resistance BReS2 by the dynamic braking resistance calculating unit 19A is as described in the second embodiment.

The dynamic braking resistance partial ground fault detector 21D determines whether the dynamic braking resistor 17 is in a sound state or in a partial ground fault state on the basis of the value of resistance BReS2 which is an output from the dynamic braking resistance calculating unit 19A and the calculation reference value (predetermined value) BReS4 which is an output from a dynamic braking resistance reference value calculating unit 29.

For example, the dynamic braking resistance partial ground fault detector 21D outputs a dynamic braking resistance partial ground fault detection signal GBRe (GBRe = 1) when the value of resistance BReS2 is less than the calculation reference value BReS4 (BReS2 < BReS4). The dynamic braking resistance partial ground fault detector 21D outputs a dynamic braking resistance partial ground fault detection signal GBRe (GBRe = 0) when the value of resistance BReS2 is greater than or equal to the calculation reference value BReS4 (BReS2 ≥ BReS4). Here, the dynamic braking resistance partial ground fault detection signal GBRe = 1 indicates a partial ground fault state. The dynamic braking resistance partial ground fault detection signal GBRe = 0 indicates a sound state.

In accordance with the fifth embodiment, the same effects as those in the fourth embodiment can be obtained by calculating the value of resistance BReS2 of the dynamic braking resistor 17 on the basis of the braking electric power PB and the value of voltage Vdc of the dynamic braking resistor 17.

(Sixth Embodiment)

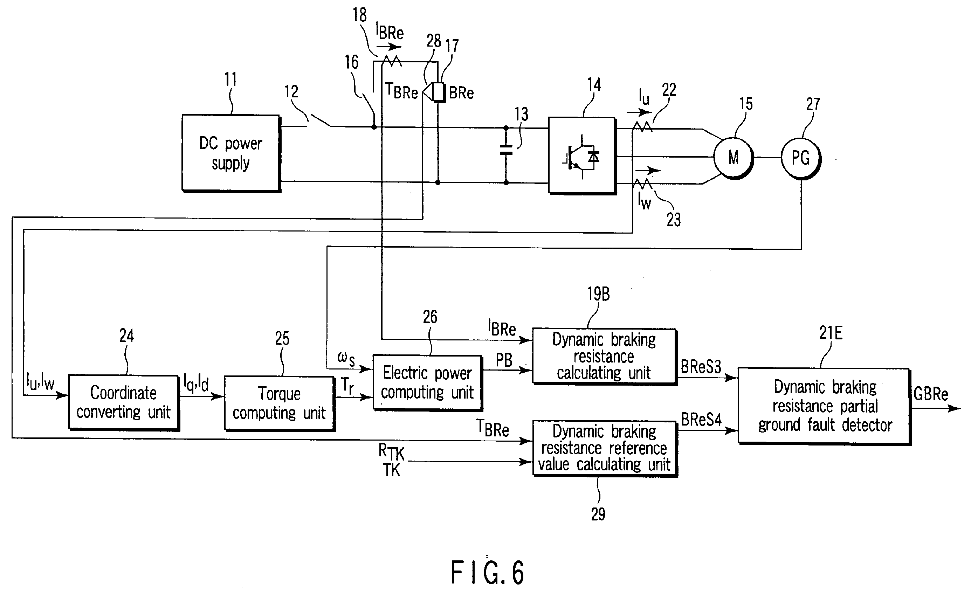

FIG. 6 is a block diagram of an electric rolling stock control apparatus according to a sixth embodiment of the present invention. In the sixth embodiment, in place of the dynamic braking resistance calculating unit 19A and the dynamic braking resistance partial ground fault detector 21D in the fifth embodiment shown in FIG. 5, a dynamic braking resistance calculating unit 19B and a dynamic braking resistance partial ground fault detector 21E are provided. Further, an electric current detector 18 is provided in place of the voltage detector 20. Note that a method for calculating a value of resistance BReS3 by the dynamic braking resistance calculating unit 19B is as described in the third embodiment.

The dynamic braking resistance partial ground fault detector 21E determines whether the dynamic braking resistor 17 is in a sound state or in a partial ground fault state on the basis of the value of resistance BReS3 which is an output from the dynamic braking resistance calculating unit 19B and the calculation reference value (predetermined value) BReS4 which is an output from a dynamic braking resistance reference value calculating unit 29.

For example, the dynamic braking resistance partial ground fault detector 21E outputs a dynamic braking resistance partial ground fault detection signal GBRe (GBRe = 1) when the value of resistance BReS3 is less than the calculation reference value BReS4 (BReS3 < BReS4). The dynamic braking resistance partial ground fault detector 21E outputs a dynamic braking resistance partial ground fault detection signal GBRe (GBRe = 0) when the value of resistance BReS3 is greater than or equal to the calculation reference value BReS4 (BReS3 ≥ BReS4). Here, the dynamic braking resistance partial ground fault detection signal GBRe = 1 indicates a partial ground fault state. The dynamic braking resistance partial ground fault detection signal GBRe = 0 indicates a sound state.

In accordance with the sixth embodiment, the same effects as those in the fourth embodiment can be obtained by calculating the value of resistance BReS3 of the dynamic braking resistor 17 on the basis of the braking electric power PB and the value of current IBRe of the dynamic braking resistor 17.

Note that the inverter 14 has been described as an inverter controlled at VVVF. However, the inverter 14 may be an inverter controlled at constant voltage/constant frequency (CVCF), or may be an inverter controlled in another system.

**Claims**

1. An electric rolling stock control apparatus **characterized by** comprising:

   an inverter (14) for converting converts direct-current power from a direct-current power supply (11) into three-phase alternating-current power;
   an alternating-current motor (15) for making an electric rolling stock run when driven by the three-phase alternating-current power converted by the inverter (14), and for carrying out brake control of the electric rolling stock when controlled as a generator;
   a dynamic braking resistor (17) for consuming electric power generated by the alternating-current motor (15) by the brake control of the electric rolling stock;
   electric current detecting means (18) for detecting a value of current flowing in the dynamic braking resistor (17);
   voltage detecting means (20) for detecting a value of voltage between both terminals of the dynamic braking resistor (17);
   dynamic braking resistance calculating means (19) for calculating a value of resistance of the dynamic braking resistor (17) on the basis of the value of current detected by the electric current detecting means (18) and the value of voltage detected by the voltage detecting means (20); and
   a dynamic braking resistance partial ground fault detector (21) for detecting a partial ground fault in the dynamic braking resistor (17) when the value of resistance calculated by the dynamic braking resistance calculating means (19) is less than a predetermined value.

2. The electric rolling stock control apparatus according to claim 1, **characterized by** further comprising:

   temperature detecting means (28) for detecting a temperature of the dynamic braking resistor; and
   dynamic braking resistance reference value calculating means (29) for calculating the predetermined value used to detect a partial ground fault by the dynamic braking resistance partial ground fault detector (21) on the basis of the temperature detected by the temperature detecting means (28).

3. An electric rolling stock control apparatus **characterized by** comprising:

   an inverter (14) for converting direct-current power from a direct-current power supply (11) into three-phase alternating-current power;
   an alternating-current motor (15) for making an electric rolling stock run when driven by the three-phase alternating-current power converted by the inverter (14), and for carrying out brake control of the electric rolling stock when controlled as a generator;
   a dynamic braking resistor (17) for consuming electric power generated by the alternating-current motor (15) by the brake control of the electric rolling stock;
   voltage detecting means (20) for detecting a value of voltage between both terminals of the dynamic braking resistor (17);
   first-phase current detecting means (22) for detecting a value of current flowing in a first phase of the three-phase alternating-current power converted by the inverter (14);
second-phase current detecting means (23) for detecting a value of current flowing in a second phase of the three-phase alternating-current power converted by the inverter (14);
velocity detecting means (27) for detecting a rotational velocity of the alternating-current motor;
coordinate converting means (24) for converting the value of current detected by the first-phase current detecting means (22) and the value of current detected by the second-phase current detecting means (23) into a value of current of a dq axis coordinate system;
torque computing means (25) for computing torque of the alternating-current motor (15) on the basis of the value of current converted by the coordinate converting means (24);
electric power computing means (26) for computing braking electric power on the basis of the torque computed by the torque computing means (25) and the rotational velocity detected by the velocity detecting means (27);
dynamic braking resistance calculating means (19) for calculating a value of resistance of the dynamic braking resistor (17) on the basis of the braking electric power computed by the electric power computing means (26) and the value of voltage detected by the voltage detecting means (20); and
a dynamic braking resistance partial ground fault detector (21) for detecting a partial ground fault in the dynamic braking resistor (17) when the value of resistance calculated by the dynamic braking resistance calculating means (19) is less than a predetermined value.

4. The electric rolling stock control apparatus according to claim 3, **characterized by** further comprising:

temperature detecting means (28) for detecting a temperature of the dynamic braking resistor; and
dynamic braking resistance reference value calculating means (29) for calculating the predetermined value used to detect a partial ground fault by the dynamic braking resistance partial ground fault detector (21) on the basis of the temperature detected by the temperature detecting means (28).

5. An electric rolling stock control apparatus **characterized by** comprising:

an inverter (14) for converting direct-current power from a direct-current power supply (11) into three-phase alternating-current power;
an alternating-current motor (15) for making an electric rolling stock run when driven by the three-phase alternating-current power converted by the inverter (14), and for carrying out brake control of the electric rolling stock when controlled as a generator;
a dynamic braking resistor (17) for consuming electric power generated by the alternating-current motor (15) by the brake control of the electric rolling stock;
electric current detecting means (18) for detecting a value of current flowing in the dynamic braking resistor (17);
first-phase current detecting means (22) for detecting a value of current flowing in a first phase of the three-phase alternating-current power converted by the inverter (14);
second-phase current detecting means (23) for detecting a value of current flowing in a second phase of the three-phase alternating-current power converted by the inverter (14);
velocity detecting means (27) for detecting a rotational velocity of the alternating-current motor;
coordinate converting means (24) for converting the value of current detected by the first-phase current detecting means (22) and the value of current detected by the second-phase current detecting means (23) into a value of current of a dq axis coordinate system;
torque computing means (25) for computing torque of the alternating-current motor (15) on the basis of the value of current converted by the coordinate converting means (24);
electric power computing means (26) for computing braking electric power on the basis of the torque computed by the torque computing means (25) and the rotational velocity detected by the velocity detecting means (27);
dynamic braking resistance calculating means (19) for calculating a value of resistance of the dynamic braking resistor (17) on the basis of the braking electric power computed by the electric power computing means (26) and the value of current detected by the electric current detecting means (18); and
a dynamic braking resistance partial ground fault detector (21) for detecting a partial ground fault in the dynamic braking resistor (17) when the value of resistance calculated by the dynamic braking resistance calculating means (19) is less than a predetermined value.

6. The electric rolling stock control apparatus according to claim 5, **characterized by** further comprising:

temperature detecting means (28) for detecting a temperature of the dynamic braking resistor; and
dynamic braking resistance reference value calculating means (29) for calculating the predetermined value used to detect a partial ground fault by the dynamic braking resistance partial ground fault detector (21) on the basis of the temperature detected by the temperature detecting means (28).

FIG.1

Dynamic braking resistance partial ground fault detector 21

GBRe

Dynamic braking resistance calculating unit 19

BReS1

BRe

M 15

14

13

20

$V_{dc}$

$V_{dc}$

17 BRe

18 $I_{BRe}$

16

12

DC power supply 11

$V_{dc}$

$I_{BRe}$

FIG. 2

F I G. 3

FIG. 4

F I G. 5

FIG.6

EP 1 818 207 A2